# EUROPÄISCHE PATENTSCHRIFT

(11) **EP 3 990 538 B1**
(45) Veröffentlichungstag und Bekanntmachung des Hinweises auf die Patenterteilung: **06.09.2023**
(21) Anmeldenummer: 20734183.5
(22) Anmeldetag: 22.06.2020
(51) Int. Cl.: C08L 1/08, C08L 1/12, C08L 63/00, C08L 67/04, C08L 67/06, C08H 8/00

(54) **VERBUNDMATERIAL MIT EINER MATRIX AUF BASIS VON ORGANISCHEN KUNSTSTOFFEN UND DESSEN VERWENDUNG**
COMPOSITE MATERIAL WITH A MATRIX ON THE BASIS OF ORGANIC PLASTICS, AND USE THEREOF
MATÉRIAU COMPOSITE COMPRENANT UNE MATRICE À BASE DE MATIÈRES PLASTIQUES ORGANIQUES ET SON UTILISATION

(30) Priorität: 01.07.2019 DE 102019117718
(43) Veröffentlichungstag der Anmeldung: 04.05.2022
(73) Patentinhaber: Deutsche Institute für Textil- und Faserforschung Denkendorf, 73770 Denkendorf (DE)
(72) Erfinder: LÜTZ, Marion, 70794 Filderstadt (DE); MILWICH, Markus, 73529 Schwäbisch Gmünd (DE); GRESSER, Götz, Theodor, 70569 Stuttgart (DE); KORGER, Horst, 85283 Wolnzach (DE)
(74) Vertreter: Meissner Bolte Partnerschaft mbB
(86) Internationale Anmeldenummer: PCT/EP2020/067349
(87) Internationale Veröffentlichungsnummer: WO 2021/001197

(56) Entgegenhaltungen:
- WO-A1-2006/066041
- DE-B3-102005 034 586
- Thilo Lehmann: "Aus der Praxis des Recyclings von Kunststoff Aus der Praxis des Recyclings von Kunststoff", Recycling und Rohstoffe Bd.6, 1. Januar 2013 (2013-01-01), Seiten 213-224, XP055722972, Neuruppin ISBN: 978-3-935317-97-9 Gefunden im Internet: URL:https://www.vivis.de/wp-content/upload s/RuR6/2013_RuR_211_224_Lehmann [gefunden am 2020-08-17]
- SAMY A. MADBOULY ET AL: "Biodegradation behavior of bacterial-based polyhydroxyalkanoate (PHA) and DDGS composites", GREEN CHEMISTRY, Bd. 16, Nr. 4, 1. Januar 2014 (2014-01-01) , Seiten 1911-1920, XP055723221, GB ISSN: 1463-9262, DOI: 10.1039/C3GC41503A
- DATABASE CA [Online] CHEMICAL ABSTRACTS SERVICE, COLUMBUS, OHIO, US; 2. November 2016 (2016-11-02), ZHANG, WENCHUN ET AL: "Long-term ultraviolet ageing-resisting steel strip armored aluminum alloy power cable", XP002800069, gefunden im STN Database accession no. 2016:1761603 -& CN 106 065 138 A (ZHEJIANG YINGMEIDA CABLE TECH CO LTD) 2. November 2016 (2016-11-02)
- Bryant David N. ET AL: "Monitoring real-time enzymatic hydrolysis of Distillers Dried Grains with Solubles (DDGS) by dielectric spectroscopy following hydrothermal pre-treatment by steam explosion", Bioresource Technology, vol. 128, 1 January 2013 (2013-01-01), pages 765-768, XP055807539, AMSTERDAM, NL ISSN: 0960-8524, DOI: 10.1016/j.biortech.2012.09.021

## Beschreibung

Die Erfindung betrifft ein Verbundmaterial mit einer Matrix auf Basis von organischen Kunststoffen, die feste Füllstoffe enthält, sowie dessen vorteilhafte Verwendungen.

Viele Materialien und Verfahren sind im Hinblick auf Umweltschutzgesichtspunkte nachteilig. Dieses zwingt die Industrie dazu, über Substitute nachzudenken. Im Falle von verstärkten plastischen Materialien sind umweltfreundliche Alternativen mit Naturfasern verstärkte Verbundmaterialien (NFK) und plastische Verbundmaterialien (WPC) (Carus et al., Bioverbundwerkstoffe, Gülzow: Fachagentur für Nachwachsende Rohstoffe e.V., 2015). Diese zeigen gute spezifische mechanische Eigenschaften und sparen COz ein. WPC werden aus thermoplastischen Polymeren und Holzfasern, Partikeln und/oder Mehl hergestellt. Die Art der Holzpartikel bestimmt die Funktion zur Verstärkung oder als Füllstoff.

Füllstoffe haben hier typischerweise einen Schlankheitsgrad von 1:50 oder größer (Vogt et al., Schriftenreihe "Nachwachsende Rohstoffe" "Wood-Plastic-Composites" Holz-Kunststoff-Verbundstoffe, Münster: Landwirtschaftsverlag). Faserpflanzen werden kultiviert (Grundmann, "Faserpflanzen aus ökologischem Anbau"; Schriftenreihe IBDF. 19.06.2007, Bd. 20) und die Faser muss isoliert werden (Gessner, "Naturfasern-Chemiefasern", Leipzig: Fachbuchverlag, 1955). Selbst dann, wenn der Einsatz von Naturfasern COz einspart, bedeutet die Produktion Energie- und Ressourcenaufwand. Daher könnte die Verwendung von Restmaterialien als Faserlieferant eine Alternative sein und durch die Kaskadennutzung die Gesamtbilanz verbessern.

Ein mögliches Abfallmaterial, welches eine Alternative für Naturfasern oder Holzpartikel sein könnte, ist der Gärrest von Biogasanlagen. Biogasanlagen sind in der Landwirtschaft üblich, um aus pflanzlicher Biomasse oder Gülle/Mist Energie zu erzeugen. Der Gärrest ist ein gutes Düngemittel, das von der Region abhängt, wobei nicht das gesamte zur Düngung geeignete Material auf die Felder aufgebracht werden kann oder soll, um eine Überdüngung auszuschließen (Berendonk, "Vergleich von Gülle und Gärresten", Tagungsband Gülle- und Gärrestdüngung auf Grünland. 10 2011, Bd. 11, S. 38-42). Die fermentierte Biomasse ist teilweise faseriges Material, was es sinnvoll macht, dessen Weiterverwendung als Rohmaterial zur Herstellung von Konstruktionsmaterialien zu untersuchen. In Biogasverfahren wird die Biomasse von Mikroorganismen umgesetzt, so dass eine chemische oder enzymatische Vorbereitung nicht erforderlich ist, um die Fasern/Partikel aus ihrem natürlichen Verbund zu lösen. Um die sogenannte "Biogasfaser" zu erhalten, ist es lediglich erforderlich, den Gärrest zu reinigen und mechanisch aufzuarbeiten. Eine Art der Verwendung besteht darin, den aufbereiteten Gärrest (von unterschiedlichen Substraten, wie Pflanzen, Aufschlämmung oder Hühnermist) mitteldichten Faserplatten (MDF) hinzuzufügen (Essel et al., "Stoffliche Nutzung lignocellulosehaltiger Gärprodukte für Holzwerkstoffe aus Biogasanlagen", Hürth: Nova Institut GmbH, 2015).

Der nachfolgend im Rahmen der Erfindung angesprochene Gärrest ist reich an Hopfenpflanzenteilen. Hopfen wird im Allgemeinen als Pflanze zum Bierbrauen genutzt, er ist seit dem frühen 20. Jahrhundert auch als Faserlieferant, insbesondere als Flachsersatz vorgesehen (Hanausek, "Lehrbuch der technischen Mikroskopie", Stuttgart: Verlag von Ferdinand Enke, 1901). Biogärreste gehen insbesondere auf geläufige Biogasverfahren zurück. Der Anfang einer Biogasanlage bildet die Vorgrube. Hier werden die sogenannten Substrate eingelagert, demzufolge organische Reststoffe. Ein besonderes Kennzeichen einer Biogasanlage ist der beheizte Faulbehälter, der auch Fermenter genannt wird. Das im Rahmen des Biogasverfahrens entwickelte Biogas wird direkt in ein Blockheizkraftwerk überführt. Hier wird Strom erzeugt und es entsteht nutzbare Prozesswärme. Fakultativ ist auch eine Überführung in ein Erdgasnetz möglich. Im Gärrestlager werden die vergorenen Reststoffe gelagert und bei Bedarf zum Düngen verwendet. Die Substratgestaltung zeigt sich in der Vorgrube. Hier wird in einem ersten Verfahrensschritt die angelieferte Biomasse gelagert und durch Schredder, Mühlen oder Wellen, zerkleinert und aufbereitet. Es entsteht somit das Substrat zur weiteren Verarbeitung im Fermenter. In diesem entsteht ein Gärrest, der eine ökologische und wirtschaftliche Alternative zu landwirtschaftlichem Dünger darstellt. Gärreste sind reich an Nährstoffen und daher geeignet, zur Düngung von Ackerflächen herangezogen zu werden. Die Gärreste werden zunächst im Gärrestlager untergebracht. Hier kann sich auch eine Nachgärung anschließen. Ein Gärrestlager kann unterschiedliche Gestaltung haben: versiegelte Freiflächen, Hallen oder auch geschlossene Behälter. Gärreste aus Biogasanlagen wurden bisher nicht als faserartiger Füllstoff oder Verstärkungsfaser eingesetzt. Sofern sie nicht, wie oben angesprochen, als landwirtschaftlicher Dünger verwendet werden, werden Gärreste teilweise energetisch verwertet. Dazu werden sie beispielsweise zu Pellets gepresst und als Brennstoff eingesetzt. Auch eine Nutzung als Zusatz in der Faserplattenproduktion wurde bereits erfolgreich untersucht. In diesem Fall werden bis zu 30% der Holzfasern durch Gärreste ersetzt.

Der oben dargestellte Stand der Technik ist in vielerlei Hinsicht verbesserungsbedürftig bzw. durch vorteilhafte Alternativen zu ersetzen. Gärreste, die als landwirtschaftliche Nebenprodukte anfallen, stellen eine bisher ungenutzte Rohstoffquelle dar. Zur Senkung der COz-Emissionen werden vermehrt nachwachsende Rohstoffe eingesetzt. Zudem ist die Verwendung von Gärresten in der Landwirtschaft derzeit eingeschränkt. Dies geht auf eine neue Düngeverordnung zurück, wonach Wirtschaftsdünger (Gärreste, Gülle) nicht ganzjährig und nur dem Nährstoffbedarf angepasst ausgebracht werden dürfen. Dadurch entstehen Engpässe bei der Lagerkapazität.

Demzufolge ist es Aufgabe der vorliegenden Erfindung, im Sinne der obigen Darstellungen eine vorteilhafte Alternative für die Verwendung von Gärresten vorzuschlagen.

Die Lösung der Aufgabe der Erfindung besteht in einem Verbundmaterial der eingangs beschriebenen Art, d.h. einem Verbundmaterial mit einer Matrix auf Basis eines organischen Kunststoffs mit einem Gehalt an festen Füllstoffen, das dadurch gekennzeichnet ist, dass der feste Füllstoff ein getrockneter Gärrest aus der Vergärung pflanzlicher Substrate ist.

Die Erfindung bezieht demzufolge für ihre Verwirklichung einen Füllstoff in Form eines getrockneten Gärrestes ein. Dieser Gärrest geht insbesondere aus der Vergärung pflanzlicher Substrate hervor, wobei es sich dabei insbesondere um Lignocellulose-haltige Substrate handelt. Insbesondere werden als Lignocellulose-haltige Substrate Hopfenrebenhäcksel, Grünschnitt, Gräser, Miscanthus und/oder Festmist herangezogen. Dieser wird in sinnvoller Weise durch Zerkleinerung vorbereitet. Dabei zeigt es sich, dass der Füllstoff nicht der Definition von Fasern im Textilbereich folgt, sondern er eher als "faserartig" bezeichnet wird. In diesem Zusammenhang ist es sinnvoll, den vorteilhaften Schlankheitsgrad des faserartigen Füllstoffs zu bezeichnen. Dieser ist vorzugsweise größer als 1:100, insbesondere größer als 1:50.

Besondere Aufmerksamkeit soll der Matrix auf Basis eines organischen Kunststoffs in Zusammenhang mit der Erfindung beigemessen werden: Von besonderem Vorteil ist es, sogenannte bio-basierte Kunststoffe heranzuziehen. Durch die Verknappung der fossilen Ressourcen wird in allen Industriebereichen nach bio-basierten Alternativen gesucht. Daher zieht man in allen denkbaren Bereichen bio-basierte Kunststoffe, auf Basis nachwachsender Rohstoffe, in Betracht.

Bio-basierte, auch teilweise bio-basierte, nicht zwingend biologisch abbaubare Kunststoffe bedeuten solche, bei denen der Kunststoff aus nachwachsenden Rohstoffen hergestellt wird. Die Grundbausteine eines bio-basierten Kunststoffs werden teilweise oder vollständig aus Biomasse gewonnen. Die bio-basierten Kunststoffe können sowohl thermoplastisch als auch duroplastisch sein. Im Rahmen der Erfindung wird es bevorzugt, dass als bio-basierter Kunststoff für die Ausbildung der Matrix ein Thermoplast oder ein Duroplast, vorzugsweise in bio-basierter Form, genutzt wird. Als besonders geeignete Beispiele eines Thermoplasten sind Cellulosederivate anzugeben, insbesondere Celluloseacetat und/oder Cellulosepropiat, und/oder Polylactid (PLA). Bei PLA handelt es sich um einen Polyester, der durch die Dehydrierung von Milchsäure und die anschließende Polymerisation der entstandenen Lactide hergestellt wird. Bei der Herstellung von Cellulosederivaten der bezeichneten Art wird Cellulose chemisch und physikalisch modifiziert.

Wird als Matrix auf einen Duroplast zurückgegriffen, dann handelt es sich vorzugsweise um ein Epoxidharz, ein ungesättigtes Polyesterharz oder ein Furanharz. Von besonderem Vorteil sind hier die bio-basierten Epoxidharze. Epoxidierte Pflanzenöle, die als Ersatz für petrochemische Epoxidharze verwendet werden, sind den teilweise bio-basierten Kunststoffen zuzuordnen. Hierfür werden pflanzliche ungesättigte Öle und Ester epoxidiert. Es entstehen dabei Harze, die durch einen Härter vernetzt werden können. Beispiele hierfür sind: epoxidierte Leinöle.

Die bisher erhältlichen, im Rahmen der Erfindung einsetzbaren Epoxidharzsysteme haben (als Harz-Härter-Gemisch) einen bio-basierten Anteil von bis zu 60%. Die bio-basierte Harzkomponente ist physiologisch unbedenklich.

Im Rahmen der Erfindung ist es darüber hinaus möglich, im Hinblick auf eine Eigenschaftssteuerung des Verbundmaterials geeignete Additive einzubeziehen. Dabei kann es sich insbesondere um Flammschutzmittel, Farbpigmente, Schlagzähigkeitsmodifizierer, UV-Schutz- und/oder Haftvermittler handeln. Darüber hinaus ist es möglich, das erfindungsgemäße Verbundmaterial bereits bei seiner Herstellung in einen Formkörper zu überführen, d.h., dass es sich um insbesondere um ein endkonturnahes Erzeugnis handelt. Grundsätzlich werden durch das erfindungsgemäße Verbundmaterial vielfältige Anwendungsmöglichkeiten erschlossen, so im Möbelbau, Messebau und für Dekorationsartikel und Produkte aus dem Bereich Garten- und Landschaftsbau.

Die Bestandteile des erfindungsgemäßen Verbundmaterials unterliegen quantitativ keiner kritischen Beschränkung. Es ist vorteilhaft, wenn das erfindungsgemäße Verbundmaterial den Füllstoff in Form getrockneter Gärreste, d.h. dies in wünschenswert zerkleinerter Form, in einer erfindungsgemäßen Menge von 30-60 Vol%, enthält.

Die Herstellung des erfindungsgemäßen Verbundmaterials ist problemlos möglich. Dem Fachmann müssen keine besonderen technischen Kenntnisse vermittelt werden. Der Thermoplast wird schlichtweg durch Erwärmen in eine viskose Form überführt, in diese dann der getrocknete Gärrest, in wünschenswert zerkleinerter Form, in der gewünschten Menge zugegeben, gegebenenfalls werden Additive einbezogen, wie oben beschrieben. Dieses Produkt wird dann, vorzugsweise in die gewünschte Form gegeben, endkonturennah ausgestaltet. Für den Fall, dass die Erfindung einen Duroplasten als Matrix nutzt, gibt es ebenfalls keine kritische Beschränkung bei der Herstellung. Daher wird das verflüssigte bzw. flüssige Epoxidharz, vorzugsweise bereits mit einem entsprechenden Härter vermischt, vorzugsweise zunächst mit dem beschriebenen zerkleinerten Gärrestmaterial versehen. Durch eine Vernetzungsreaktion kann das Epoxidharz in einen Duroplast überführt werden.

Bei der Verwirklichung der vorliegenden Erfindung kann es im Einzelfall sehr vorteilhaft sein, dass dem Ausgangsmaterial zur Herstellung des Gärrestes neben Hopfenreben noch zusätzliche Materialien beigegeben werden, so insbesondere Grassilage und/oder Maissilage.

Die Erfindung soll im Hinblick auf die oben dargestellten technischen Merkmale, die bei deren Nutzung zwingend oder vorteilhaft sind, weitergehend dargestellt werden, dies insbesondere unter Einbezug der Darstellung besonderer Vorteile, die mit der Erfindung verbunden sind:
Zur Entlastung der Lagerkapazität und zur Schaffung CO₂-sparender und nachhaltiger Produkte werden Gärreste als Rohstoff für die Herstellung der bezeichneten Verbundmaterialien eingesetzt. Das Verbundmaterial auf Basis von insbesondere Hopfen-Gärresten setzt sich aus gewaschenen und gemahlenen Hopfengärresten (vorstehend Gärrest) und insbesondere einer bio-basierten duroplastischen Matrix zusammen, bei der es sich um ein umweltfreundliches Produkt handelt.

Das erfindungsgemäße Verbundmaterial zeichnet sich insbesondere dadurch aus, dass es aufgrund der eingesetzten Füllstoffe der beschriebenen Art eine sehr geringe Dichte von etwa 1 aufweist. Damit erfüllt es eine grundlegende Anforderung für den Bereich des Leichtbaus. Da die Füllstoffe bzw. Gärreste aus einem Prozess mit einem sauren Reaktionsmedium stammen, ergibt sich daraus für die fertigen Gärreste eine besonders gute Säurebeständigkeit. Dies ist gegenüber bisherigen Naturfasern vorteilhaft. Durch den Abbau des Pflanzenmaterials bzw. Abfallstoffs in der Bioanlage muss sich kein weiterer Aufschluss anschließen. Als einzige Aufbereitungsschritte sind Waschen und Zerkleinern des Gärrestes sinnvoll. Die Kosten, die im Zusammenhang mit diesem Material entstehen, sind niedrig. Aufgrund der oben bereits angesprochenen Säurebeständigkeit des erfindungsgemäß herangezogenen Füllstoffs kann daraus eine hohe Lebensdauer des Verbundmaterials abgeleitet werden. Die bei dem erfindungsgemäßen Verbundmaterial in Erscheinung getretene geschlossene Oberfläche verhindert das Eindringen von Feuchtigkeit, anders als bei herkömmlichen Holzfaserplatten, die ein weiteres Versiegeln der Oberfläche erfordern.

Die Erfindung soll anhand der nachfolgenden Beispiele weitergehend erläutert werden:

### Beispiele:

### 1. Material

### 1.1. Faseriges Füllstoffmaterial

Die gewaschenen und getrockneten Biogas-Gärreste werden von dem Betreiber einer Biogasanlage geliefert. Dieses Material stammt demzufolge aus einer Biogasanlage, die lediglich faserige Pflanzen als Substrat heranzieht. Dieses Ausgangsprodukt ist einzigartig, da es zu 75% aus Hopfenstängeln unterschiedlicher Länge und Dicke besteht. Die Dichte der Biogaspartikel (gemessen durch Wasserverdrängung) beträgt etwa 0,5 g/cm³.

### 1.2. Matrixmaterial

Als Beispiel-Matrix werden zwei bio-basierte Epoxy-Matrixsysteme herangezogen: Greenpoxy 56/ SZ8528 (GP56) und PTP-Harz/PTP-Härter (PTP). Die wesentlichen Eigenschaften dieser Matrixsysteme sind in der nachfolgenden Tabelle 1 bezeichnet.

**Tabelle 1: Kennzeichen der verwendeten Matrixsysteme**

| Matrix | | Viskosität (mPas) | Bio-basierter Teil (%) | Dichte (g/m3) | Spezifische Biegefestigkeit (MPa/(g/cm³)) | Spezifischer Biegemodul (MPa/(g/cm³)) |
|---|---|---|---|---|---|---|
| GP 56 | Harz | 800 | 50-58 | 1,198 | 94 | 2574 |
| | Härter | 33 | 0 | 0,94 | | |
| PTP | Harz | 900 | 100 | 1,03 | 71 | 1750 |
| | Härter (Anhydrid) | - | - | - | | |

Anmerkung: GP56 ist ein teilweise bio-basiertes Epoxidharz, das zum Verkleben und Beschichten einer COz-neutralen Alternative zu rein petrochemischen Harzen herangezogen wird. 56% der molekularen Struktur des Harzes sind pflanzlicher Herkunft, ein hoher Anteil der Kohlenstoffe wird aus Biomasse hergestellt. Seine Summenformel beträgt C₂₁H₂₄O₄. Der Härter SZ8528 hat die Summenformel C₁₀H₂₂N₂. Bei dem zweiten Harzsystem PTP handelt es sich um ein duroplastisches Harz auf Basis nachwachsender Rohstoffe. Das Polymer besteht aus Triglyceriden und Polycarbonsäuren. Das Harz wird aus pflanzlichen Ölen hergestellt und besteht zu 100% aus epoxidierten Triglyceriden. Die Summenformel vom PTP ist C₉H₁₀O₃ und die des Härters C₃H₄N₂.

### 2. Versuche

### 2.1. Herstellung des Materials aus dem Gärrest

Der heterogene Gärrest wird 60 Sekunden lang mit einer Schneidmühle zerkleinert. Um zu große Partikel und Staub des Materials auszusondern, werden unterschiedliche Siebgrößen (3 mm, 2 mm, 1 mm, 0,5 mm) beim Ausziehen herangezogen. Partikel, welche durch ein Sieb von 1 mm treten, jedoch nicht durch ein Sieb von 0,5 mm, werden herangezogen. Nach dem Sieben des Materials wird die Länge des faserartigen Materials gemessen.

### 2.2. Herstellung der Verbundplatten

Zuerst werden Harz und Härter vermischt. Danach werden die faserförmigen Materialien mit dem Harz-Härter-Gemisch zu einer homogenen Masse vermischt. Die Mischung wird gleichmäßig in dem Werkzeug verteilt und vorverdichtet. Die Prüfplatten werden dann mittels Heißpresse hergestellt. Die Konsolidierung findet somit unter Hitze- und Druckeinwirkung statt.

Die Gärrestpartikel und das Harz werden materiell in einem Partikel-Volumen-Verhältnis von 30% und 40% gemischt und in eine Form eingebracht. Zur Konsolidierung wird die Mischung Partikel/Harz zwei Stunden lang unter einem Druck von 9 bar verpresst. Die Presstemperatur richtet sich nach den jeweiligen Herstellerangaben (GP56 80°C, PTP 120°C).

### 2.3. Prüftest

Dicke/Stärke und Dichte des Verbundmaterials werden gemessen. Um die Verbundmaterialqualität und die Imprägnierung zu bewerten, werden Schliffbilder angefertigt. Die Zug- und Biegeeigenschaften werden an einem ZWICK-Testgerät gemessen. Die Zugfestigkeit wird angelehnt an DIN EN ISO 527-4 (Probengröße geändert auf 170 x 25 x 2 mm) und die Biegefestigkeit in Anlehnung an DIN EN ISO 14125 (geänderte Probengröße 40 x 15 x 2 mm) gemessen. Beide Tests werden anhand von jeweils 6 Proben durchgeführt.

### 2.4. Ergebnisse und Folgerungen

Die Füllstoffpartikel haben eine sehr homogene Längenverteilung. 20% der Partikel haben eine Länge von 0,3 bis 2 mm, 40% eine Länge von 2,0 bis 4,0 mm, 19% eine Länge von 4,0 bis 6,0 mm, 15% eine Länge von 6,0 bis 8,0 mm und 4% eine Länge von 8,0 bis 10,0 mm. Der Schlankheitsgrad beträgt etwa 1:6, so dass die Füllstoffe als solche klassifiziert werden konnten.

Ein sehr leichtes bio-basiertes Verbundmaterial kann aus einem Hopfen-reichen Gärrest gewonnen werden. Die folgende Tabelle 1 zeigt Dichte und Gewicht pro Fläche des Verbundmaterials. Durch Anhebung des PVR (Partikel-Volumen-Verhältnis) um 10% hat sich die Dichte des Verbundmaterials nicht geändert.

**Tabelle 1: Dichte und Gewicht pro Fläche beziehen sich auf Verbundmaterialien mit unterschiedlichem Füllstoffanteil (PVR mit unterschiedlichem Füllstoffgehalt)**

| Parameter | GP56 | | PTP | |
|---|---|---|---|---|
| Partikel-Volumen-Verhältnis (PVR) (%) | 30 | 40 | 30 | 40 |
| Dichte (g/cm³) | 1,12 | 1,09 | 1,10 | 1,04 |
| Gewicht/Fläche (g/cm²) | 0,23 | 0,23 | 0,23 | 0,22 |

### 3. Eigenschaften

### 3.1. Oberfläche und Konsolidierunasaualität

Beide Verbundmaterialien gleichen Partikel-Volumen-Verhältnisses (30%, 40%) haben eine Dicke von 2 mm (± 0,03 mm), sind flach und zeigen eine glatte sowie eine geschlossene Oberfläche. Dies lässt sich durch einen hinterleuchteten Tisch zeigen. Ein höheres Partikel-Volumen-Verhältnis führt zu gleichmäßigeren Verbundmaterialien. Die Verteilung der Partikel ist mit höherer Anzahl von Partikeln besser. Das Verbundmaterial ist vollständig konsolidiert. Ein Schliffbild zeigt, dass die Matrix mit Partikeln gesättigt ist, obwohl noch in einem gewissen Umfang Lufteinschlüsse vorliegen. Die ungleichmäßige Verteilung bei einem Füllstoffgehalt von 30% und die Lufteinschlüsse sind möglicherweise das Ergebnis eines manuellen Herstellungsverfahrens. Das Verbundmaterial weist eine geschlossene Oberfläche auf.

### 3.2. Zugeigenschaften

Der Füllstoffgehalt beeinflusst die spezifische Zugfestigkeit und das Modul des Verbundmaterials nicht. Die Werte liegen bei 17,5 (MPa/(g/cm³) (PTP 30%). Es besteht eine minimale Tendenz des Anhebens der Festigkeit mit höherem Füllstoffgehalt beim GP56. Die Streuung der Festigkeitswerte kann auf unterschiedliche Partikelgrößen und die manuelle Herstellung zurückgeführt werden. Beim Zugfestigkeitsmodul sind zwischen den zwei bio-basierten Matrices größere Unterschiede festzustellen. Der spezifische Modul von GP56 ist nahezu 40% höher als der des PTP. Der Modul vom GP56 beträgt bei 30%: 2586 MPa/(g/cm³) und 40%: 2658 MPa/(g/cm³). Alle Verbundmaterialien zeigen eine klare Bruchkante und kein Splittern.

### 3.3. Biegeeigenschaften

Die spezifische Biegefestigkeit ist bei allen Varianten nahezu gleich. Somit hat der Feststoffgehalt keinen bedeutsamen Einfluss. Der Wert der spezifischen Biegefestigkeit beträgt etwa 45 MPa/(g/cm³) (43,6 MPa/(g/cm³) GP56 40% und PTP 40%). Es besteht kein wesentlicher Unterschied zwischen dem Biegemodul der Proben mit 30% und 40% Feststoffgehalt, obwohl es eine Tendenz zur Anhebung der Werte gibt. Der Modul von PTP 30% mit 1770 MPa/(g/cm³) ist halb so hoch wie der vom GP56 30% (3470 MPa/(g/cm³)). Das Partikel-Volumen-Verhältnis hat einen bedeutsamen Einfluss auf die Biegeeigenschaften. Die unterschiedlichen Werte von PTP und GP56 und den anderen Verbundmaterialien geht zurück auf die Harzeigenschaften. Analog den Zugeigenschaften kann die Verteilung der Partikelgröße eine Erklärung für die Streuung des Wertes sein.

### 4. Folgerungen

**4.1.** Es ist möglich, ein leichtgewichtiges Verbundmaterial mit einem bio-basierten Matrix-System und mit einem hopfenreichen Gärrest aus Biogasanlagen herzustellen. Das Verbundmaterial kann als eine Art Duroplast-WPC angesehen werden, da sich die Partikelfüllstoffe im WPC in der gleichen Weise wie Holzpartikel oder Mehl verhalten. Die Gärrestpartikel können den bio-basierten Gehalt eines Polymers anheben. Die Ergebnisse zeigen, dass die bio-basierte Matrix ähnliche Eigenschaften wie eine herkömmliche petrochemische Matrix aufweist, so dass es sich empfiehlt, die Kombination eines bio-basierten Epoxidharzes und des Füllstoffs zu wählen.

**4.2.** Der Hauptvorteil des Gärrestes besteht darin, dass er ein wertvolles Abfallprodukt darstellt, das bisher für eine besondere Verwendung nicht speziell hergestellt wurde. Dieses Material ist umweltfreundlich und steigert den Wert der pflanzlichen Biomasse. Im Falle von Hopfen ist es nun möglich, ein Lebensmittel (in diesem Falle Bier), Energie und industrielle Rohmaterialien für Verbundmaterialien aus einer einzigen Pflanze zu gewinnen. Spezielle Verwendungen dieses Materials betreffen Möbel und andere Lifestyle-Produkte (Designer-Produkte des täglichen Lebens), sowie für Produkte für den Garten- und Landschaftsbau.

## Patentansprüche

1. Verbundmaterial mit einer Matrix auf Basis von organischen Kunststoffen, die einen festen faserartigen Füllstoff enthält, **dadurch gekennzeichnet, dass** der feste faserartige Füllstoff ein getrockneter Gärrest aus der Vergärung pflanzlicher Substrate ist, wobei der Gärrest auf der Vergärung von Lignocellulose-haltigen Substraten beruht und wobei der Kunststoff der Matrix ein Duroplast ist und wobei der Füllstoff als getrockneter zerkleinerter Gärrest in einer Menge von 30 bis 60 Vol.-% in dem Verbundmaterial vorliegt.

2. Verbundmaterial nach Anspruch 1, **dadurch gekennzeichnet, dass** das Lignocellulose-haltige Substrat auf Hopfenreben, Grünschnitt, Gräsern, Miscanthus und/oder Festmist zurückgeht.

3. Verbundmaterial nach mindestens einem der vorhergehenden Ansprüche, **dadurch gekennzeichnet, dass** der Schlankheitsgrad des faserartigen Füllstoffs größer als 1:100, insbesondere größer als 1:50, ist.

4. Verbundmaterial nach mindestens einem der vorhergehenden Ansprüche, **dadurch gekennzeichnet, dass** der Kunststoff der Matrix ein Duroplast in bio-basierter Form ist.

5. Verbundmaterial nach Anspruch 4, **dadurch gekennzeichnet, dass** der Duroplast ein Epoxidharz, ein ungesättigtes Polyesterharz oder ein Furanharz ist.

6. Verbundmaterial nach mindestens einem der vorhergehenden Ansprüche, **dadurch gekennzeichnet, dass** es zusätzlich eigenschaftsverbessernde Additive enthält, insbesondere Flammschutzmittel, Farbpigmente, UV-Schutzmittel, Haftvermittler und/oder Schlagzähigkeitsmodifizierer.

7. Verbundmaterial nach mindestens einem der Ansprüche 1 bis 6, **dadurch gekennzeichnet, dass** der Füllstoff als getrockneter zerkleinerter Gärrest in einer Menge von 30 bis 40 Vol.-% in dem Verbundmaterial vorliegt.

8. Verwendung eines Verbundmaterial nach mindestens einem der vorhergehenden Ansprüche zur Herstellung eines Formkörpers, insbesondere in Form eines endkonturnahen Erzeugnisses.

9. Verwendung des Verbundmaterials nach mindestens einem der vorhergehenden Ansprüche im Möbelbau, Messebau, Dekorationsartikel und Produkte aus dem Bereich Garten- und Landschaftsbau.

## Claims

1. Composite material with a matrix based on organic plastics containing a solid fibrous filler, **characterized in that** the solid fibrous filler is a dried digestate from the fermentation of vegetable substrates, wherein the digestate is based on the fermentation of lignocellulose-containing substrates and wherein the plastic of the matrix is a thermoset and wherein the filler is present as a dried comminuted digestate in an amount of 30 to 60% by volume in the composite material.

2. Composite material according to claim 1, **characterized in that** the lignocellulose-containing substrate is based on hop bines, green cuttings, grasses, miscanthus and/or solid manure.

3. Composite material according to at least one of the preceding claims, **characterized in that** the slenderness ratio of the fibrous filler is greater than 1:100, in particular greater than 1:50.

4. Composite material according to at least one of the preceding claims, **characterized in that** the plastic of the matrix is a thermoset in bio-based form.

5. Composite material according to claim 4, **characterized in that** the thermoset is an epoxy resin, an unsaturated polyester resin or a furan resin.

6. Composite material according to at least one of the preceding claims, **characterized in that** it additionally contains property-improving additives, in particular flame retardants, color pigments, UV-protective agents, adhesion promoters and/or impact modifiers.

7. Composite material according to at least one of claims 1 to 6, **characterized in that** the filler is present as dried comminuted digestate in an amount of 30 to 40% by volume in the composite material.

8. Use of a composite material according to at least one of the preceding claims for producing a molded article, in particular in the form of a near-net-shape article.

9. Use of the composite material according to at least one of the preceding claims in furniture construction, trade fair construction, decorative articles and products from the field of gardening and landscaping.

## Revendications

1. Matériau composite avec une matrice à base de matières plastiques organiques, qui contient une charge solide de type fibreuse, **caractérisé en ce que** la charge solide de type fibreuse est un résidu de fermentation sec issu de la fermentation de substrats végétaux, dans lequel le résidu de fermentation repose sur la fermentation de substrats contenant de la lignocellulose et dans lequel la matière plastique de la matrice est une matière thermodurcissable et dans lequel la charge est présente dans le matériau composite en tant que résidu de fermentation broyé séché en une quantité de 30 à 60 % en vol.

2. Matériau composite selon la revendication 1, **caractérisé en ce que** le substrat contenant de la lignocellulose est attribué à des pieds de houblon, des déchets végétaux, des herbes, du miscanthus et/ou à du fumier solide.

3. Matériau composite selon au moins l'une quelconque des revendications précédentes, **caractérisé en ce que** le degré de finesse de la charge de type fibreuse est supérieur à 1:100, en particulier est supérieur à 1:50.

4. Matériau composite selon au moins l'une quelconque des revendications précédentes, **caractérisé en ce que** la matière plastique de la matrice est une matière thermodurcissable sous une forme d'origine biologique.

5. Matériau composite selon la revendication 4, **caractérisé en ce que** la matière thermodurcissable est une résine époxy, une résine de polyester insaturée ou une résine de furanne.

6. Matériau composite selon au moins l'une quelconque des revendications précédentes, **caractérisé en ce qu'**il contient en supplément des additifs améliorant les propriétés, en particulier des agents retardateurs de flammes, des pigments de couleur, des agents de protection anti-UV, des promoteurs d'adhérence et/ou des agents de modification de résistance aux chocs.

7. Matériau composite selon au moins l'une quelconque des revendications 1 à 6, **caractérisé en ce que** la charge est présente dans le matériau composite en tant qu'un résidu de fermentation broyé séché en une quantité de 30 à 40 % en vol.

8. Utilisation d'un matériau composite selon au moins l'une quelconque des revendications précédentes pour fabriquer un corps moulé, en particulier sous la forme d'un produit avec un contour proche du contour final.

9. Utilisation du matériau composite selon au moins l'une quelconque des revendications précédentes dans la construction de meubles, dans le domaine des stands de foire, dans les articles de décoration et les produits issus du secteur de l'horticulture et du paysagisme.
